# FASCICULE DE BREVET EUROPEEN

(11) **EP 4 147 548 B1**
(45) Date de publication et mention de la délivrance du brevet: **26.11.2025**
(21) Numéro de dépôt: 22194553.8
(22) Date de dépôt: 08.09.2022
(51) Int. Cl.: A01B 3/46, A01B 59/043, A01B 59/06, A01B 73/04

(54) **MACHINE AGRICOLE AVEC UNE TÊTE D'ATTELAGE MUNIE D'UN DISPOSITIF DE VERROUILLAGE**
LANDWIRTSCHAFTLICHE MASCHINE MIT EINEM KUPPLUNGSKOPF, DER MIT EINER VERRIEGELUNGSVORRICHTUNG VERSEHEN IST
AGRICULTURAL MACHINE WITH A COUPLING HEAD PROVIDED WITH A LOCKING DEVICE

(30) Priorité: 10.09.2021 FR 2109487
(43) Date de publication de la demande: 15.03.2023
(73) Titulaire: Kuhn-Huard S.A.S, 44110 Chateaubriant (FR)
(72) Inventeur: DUCROQUET, Frédéric, 44110 VILLEPOT (FR); GAUTRON, Herrman, 44670 SAINT JULIEN DE VOUVANTES (FR)
(74) Mandataire: Hager, Esther Evelyne

(56) Documents cités:
- EP-B1- 3 035 786
- FR-A1- 2 617 365
- FR-A1- 2 651 637
- US-A- 4 045 143

## Description

La présente invention concerne le domaine du machinisme agricole, en particulier des machines attelées à un véhicule tracteur lors de leur utilisation et leur transport, notamment celles comportant une tête d'attelage dite oscillante ou à palonnier. Dans ce contexte, l'invention porte sur une machine du type précité muni d'un dispositif de verrouillage bloquant amovible de la tête d'attelage.

L'invention vise plus particulièrement une machine agricole, en particulier par exemple une charrue comprenant un bâti portant au moins un outil et une tête d'attelage pour sa liaison avec un dispositif d'attelage trois points d'un véhicule tracteur. Cette tête d'attelage comprend, d'une part, une traverse d'attelage formant palonnier et comportant à ses deux extrémités opposées des attaches destinées à venir en engagement avec les deux points d'attelage inférieurs du dispositif d'attelage trois points, et, d'autre part, une pièce d'assemblage articulé pour la traverse, qui est solidaire du bâti et reçoit cette traverse (de manière contraignante) dans un espace plan de montage dans lequel elle est mobile avec guidage en translation et en rotation par l'intermédiaire d'une liaison pivot/ glissière. L'axe du pivot est perpendiculaire au plan de l'espace de montage, la glissière est parallèle au plan et les mouvements de translation et de rotation relatifs entre la traverse et la pièce d'assemblage articulé sont limités par des butées, respectivement avant et arrière par rapport à la glissière et la direction d'avance de la machine en configuration d'utilisation (labour, retournement, demi-tour) et en configuration de transport.

La glissière, par exemple sous la forme d'un trou oblong orienté selon la direction d'avance, permet d'augmenter l'angle de braquage entre le tracteur et la machine lors des manœuvres, notamment les demi-tours. Le pivot peut se déplacer librement dans la glissière et permet notamment de modifier la distance entre le tracteur et la machine, une distance plus grande autorisant un angle de braquage plus court.

Par le document FR 2 651 637, qui concerne une charrue sensiblement en accord avec les dispositions techniques ci-dessus, on connait une première solution de verrouillage avec un unique tourillon (figure 3 de ce document), dont la sécurité apparait limitée et la mise en œuvre peu ergonomique.

Une deuxième solution proposée dans FR 2 651 637 (figure 4 de ce document) utilise deux tourillons pour réaliser le verrouillage. Bien qu'étant plus sûre, cette seconde solution n'est pas plus ergonomique. En effet, et contrairement à ce qui est indiqué dans ce document, l'utilisateur ne peut pas effectuer ce verrouillage (ni d'ailleurs le déverrouillage) en restant assis dans son siège, mais doit plutôt, pour insérer la première broche (côté gauche), se glisser entre la roue arrière du tracteur et la machine, puis contourner celle-ci par l'arrière pour insérer la deuxième broche (côté droit), les deux broches n'étant pas visibles, ni a fortiori accessibles, d'un seul côté. La même situation problématique se présente avec la charrue du document EP 2875707 (voir figures 4 et 6). Le document EP 3035786 B1 divulgue une charrue avec un dispositif de limitation du déplacement et de la rotation de la tête d'attelage comportant deux verrous, Cette charrue ne comporte pas de dispositif de verrouillage

En outre, dans les deux cas précités, chaque broche constitue une pièce détachée, qu'il faut ranger lorsqu'elle n'est pas utilisée et qui est perdable.

La présente invention a pour but de pallier au moins le premier des inconvénients précités.

A cet effet, elle a pour objet une machine du type évoquée en introduction et caractérisée en ce que la tête d'attelage comprend un dispositif de verrouillage à au moins deux verrous et à commande unique, configurés pour bloquer en position, en translation et en rotation, la traverse d'attelage par rapport à la pièce d'assemblage articulé, ce en coopération avec au moins l'une des butées et que le dispositif de verrouillage comprend une tringlerie de déplacement simultané et synchronisé des deux verrous entrainée par un unique organe de commande.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
[Fig. 1A] et
   [Fig. 1B] sont des vues d'une machine selon l'invention sous la forme d'une charrue, respectivement en configuration de travail (labour à droite) et en configuration de transport ;
[Fig. 2A] est une vue en perspective frontale d'un ensemble potence/tête d'attelage d'une machine agricole, par exemple d'une charrue, le cas échéant celle des figures 1 ;
[Fig. 2B] est une vue partielle et en perspective de dessous de l'ensemble représenté figure 2A ;
[Fig. 3A] et
   [Fig. 3B] sont des vues partielles en perspective représentant la tête d'attelage faisant partie de l'ensemble montré sur les figures 2, et,
[Fig. 4] est une vue en perspective simplifiée et à une autre échelle de la tête d'attelage des figues 3, la plaque supérieure étant enlevée.

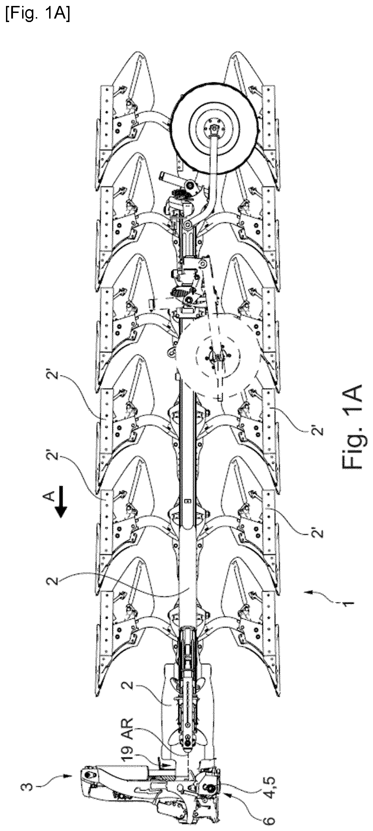

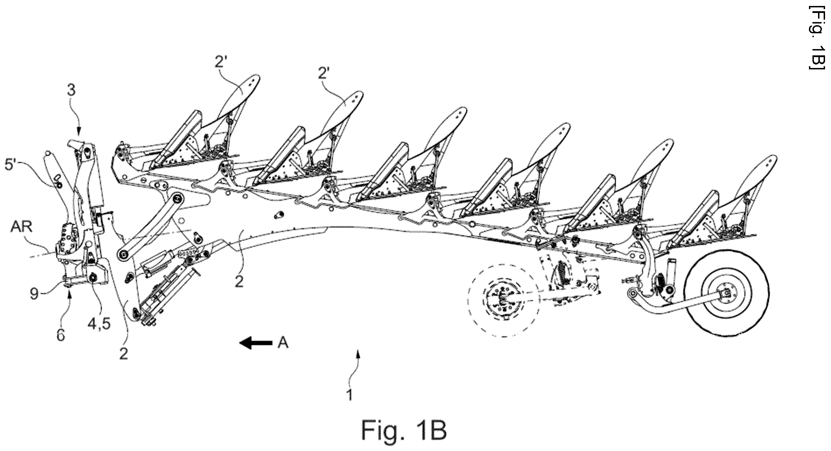

Les figures 1A et 1B illustrent une machine agricole (1), en particulier ici une charrue, comprenant un bâti (2) portant au moins un outil (2') et une tête d'attelage (3) pour sa liaison avec un dispositif d'attelage trois points d'un véhicule tracteur. La machine agricole (1) est destinée à être déplacée selon une direction d'avance (A) en configuration de travail et en configuration de transport. La tête d'attelage (3) comprend, d'une part, une traverse d'attelage (4) comportant à ses deux extrémités opposées des attaches (5) destinées à venir en engagement avec les deux points d'attelage inférieurs du dispositif d'attelage trois points (du véhicule tracteur), et, d'autre part, une pièce (6) d'assemblage articulé pour la traverse (4), qui est solidaire du bâti (2) et reçoit cette traverse (4) dans un espace plan de montage (PM) dans lequel elle est mobile avec guidage en translation et en rotation par l'intermédiaire d'une liaison pivot (7) / glissière (8). L'axe (AP) du pivot (7) -par exemple physiquement une portion de tige cylindrique- est perpendiculaire au plan (principal, médian) de l'espace de montage (PM), la glissière (8) est parallèle au plan et les mouvements de rotation relatifs entre la traverse (4) et la pièce d'assemblage articulé (6) sont limités par des butées, respectivement avant (9) et arrière (10) par rapport à la glissière (8) et la direction d'avance (A) de la machine (1) en configuration de travail et en configuration de transport. Grâce à la glissière (8) orientée selon la direction d'avance (A), la traverse d'attelage (4) est apte à se déplacer en translation par rapport à la pièce d'assemblage (6) articulé pour augmenter l'angle de braquage entre le tracteur et la machine agricole (1). L'axe (AP) du pivot (7) comme la glissière (8) s'étendent avantageusement dans le plan vertical médian de la tête d'attelage (3). La glissière (8) est disposée au milieu de la pièce d'assemblage (6) articulé. L'axe (AP) est disposé au centre de la traverse (4), et au milieu entre les deux extrémités opposées des attaches (5). Les butées arrière (10) sont espacées l'une de l'autre, elles s'étendent de part et d'autre de la glissière (8). Elles sont disposées à une extrémité latérale de la pièce d'assemblage (6) articulé. Les deux butées arrière (10) sont alignées et disposées perpendiculairement par rapport à la glissière (8). La butée avant (9) limite la rotation de la traverse (4) lors des manœuvres du véhicule tracteur, en virages à droite ou à gauche. La butée avant (9) est disposée dans le plan de symétrie médian de la tête d'attelage (3). Sa disposition dans le plan de symétrie permet un débattement angulaire de la traverse (4) identique pour une manœuvre à droite et une manœuvre à gauche. La butée avant (9) est avantageusement disposée devant la glissière (8) compte tenu de la direction d'avance (A), et dans l'alignement de l'axe longitudinal (AL) de cette glissière. La glissière (8) est disposée dans le triangle formé par les trois butées (9, 10). Selon une alternative non représentée, la butée avant (9) peut être positionnée dans la glissière (8).

La figure 1A illustre une machine sous forme de charrue réversible (1) dans sa configuration de travail, ici labour à droite. La charrue comporte deux groupes de corps de labour (2'), arrangés de part et d'autre pour un travail de labour respectivement à droite ou à gauche par rapport à la direction d'avance (A). Le bâti (2) est relié à la tête d'attelage (3) par une liaison pivot (19) définissant un axe de retournement (AR) pour le passage réversible d'une configuration de travail à l'autre, par pivotement d'environ un demi-tour. Dans la configuration de travail, la charrue (1) est accrochée au dispositif d'attelage trois points du véhicule tracteur, on dit que la charrue est portée. Le bâti (2) porte une roue pour le contrôle de la profondeur des corps de labour. Cette roue est implantée soit à l'arrière du bâti (2) ou soit latéralement sur le bâti (2). Lors de la configuration de transport telle que représentée sur la figure 1B, la machine agricole (1), et particulièrement la charrue, repose au sol à l'arrière au moyen d'une roue et à l'avant via les deux points d'attelage inférieurs (5) du dispositif d'attelage trois points. Au transport, la bielle supérieure -associée au point d'attelage supérieur (5')- est désaccouplée pour que la charrue puisse être traînée derrière le tracteur (uniquement attachée par les points d'attelage inférieurs) pour épouser les éventuelles dénivellations du terrain. La charrue est alors trainée ou semi-portée à l'arrière du tracteur comme une remorque. Ainsi, on dit que cette charrue est portée au travail et semi-portée au transport. Lors du retournement, la roue est dégagée du sol. D'une manière particulière, la roue en position arrière est représentée en traits continus sur les figures 1A et 1B et l'implantation latérale est représentée en traits discontinus. Lorsque la roue remplie la fonction de réglage de profondeur de travail et la fonction d'appui au sol au transport, on parle d'une roue combinée. En comparant les figures 1A et 1B, on peut relever que la tête d'attelage (3) comporte aussi, au-dessus de la pièce d'assemblage articulé (6), une potence en deux parties, à savoir une partie avant et une partie arrière qui sont mobiles en rotation entre elles (reliée par une liaison pivot inférieure). La partie avant comporte le point d'attelage supérieur (5') et est susceptible de pivoter par rapport à la partie arrière autour d'un axe de potence sensiblement horizontal et perpendiculaire à l'axe de retournement. Les deux parties sont solidarisées et le pivotement bloqué lorsqu'un moyen de blocage, par exemple sous la forme d'une anse ou d'une 'casquette', est abaissé (figure 1A).

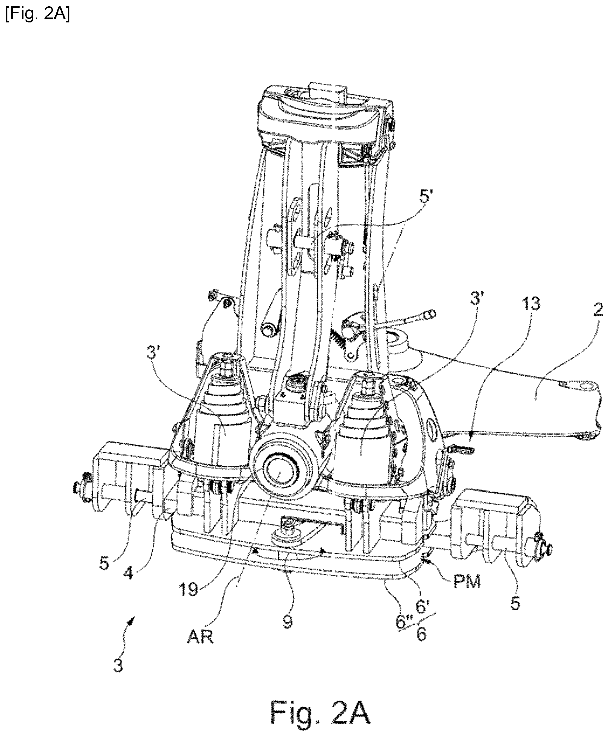

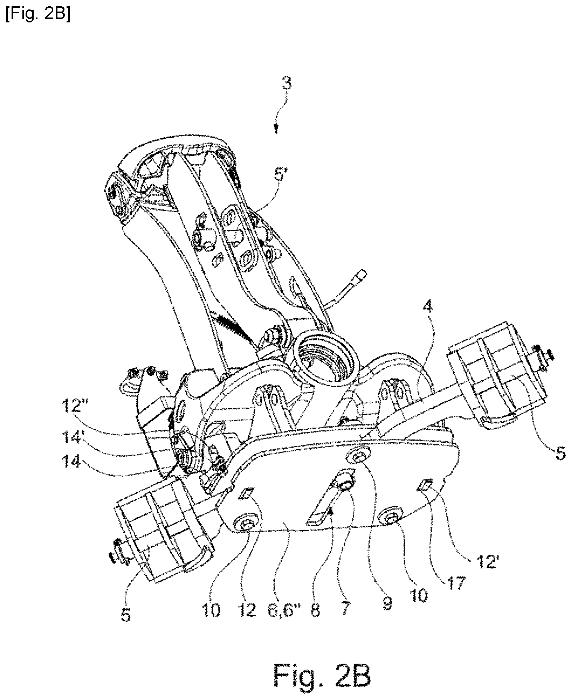

Les figures 2 illustrent la tête d'attelage (3) d'une machine agricole (1) et notamment le dispositif d'attelage trois points et une partie du bâti (2) dans l'une des positions de travail. Cette tête d'attelage (3) est équipée d'une suspension, sous forme de ressorts volute (3'), disposée à l'avant de part et d'autre de l'axe de retournement (AR).

Conformément à l'invention, cette machine (1) est caractérisée en ce que la tête d'attelage (3) comprend un dispositif de verrouillage (11) à au moins deux verrous (12, 12') et à commande unique, configurés pour bloquer en position, en translation et en rotation, la traverse d'attelage (4) par rapport à la pièce d'assemblage articulé (6), ce en coopération avec au moins l'une des butées (9, 10), ou l'un des deux types de butées (9, 10). Le dispositif de verrouillage (11) étant préférentiellement intégré constructivement et en totalité à la tête d'attelage (3). Il est préférentiellement aussi intégré sensiblement en totalité dans l'encombrement latéral de la tête d'attelage (3).

Grâce à l'invention, il est possible avec une manœuvre unique et sans avoir à manipuler de pièce séparée, de bloquer la traverse d'attelage (4). En outre, lorsque le dispositif de verrouillage (11) fait en totalité partie intégrante de la tête d'attelage (3), la contrainte de rangement de pièces et les risques de perte sont écartés.

Selon l'invention, le dispositif de verrouillage (11) comprend une tringlerie de déplacement simultané et synchronisé des deux verrous (12, 12'), entrainée par un unique organe de commande (13). Le dispositif de verrouillage (11) commande le déplacement du verrou droit (12) et du verrou gauche (12'). C'est le même organe de commande (13) qui commande le déplacement deux verrous (12, 12'). Le déplacement des verrous (12, 12') se fait de manière synchronisé (l'un après l'autre) ou de manière simultané (en même temps). Les deux verrous (12 et 12') sont avantageusement agencés pour un mouvement en translation perpendiculaire au plan de l'espace de montage (PM), dans leur déplacement alternatif entre une position engagée de verrouillage avec blocage de la traverse d'attelage (4) et une position dégagée de déverrouillage avec libération de cette traverse (4).

Plus précisément, il peut être prévu dans ce mode de réalisation que la tringlerie du dispositif de verrouillage (11) comprenne, pour chaque verrou (12, 12'), une biellette d'actionnement (14) reliée à une barre (15) de manœuvre commune, pouvant être entrainée en rotation autour de son axe par l'organe de commande (13). L'actionneur de commande (13) est avantageusement un levier arrangé latéralement par rapport à la tête d'attelage (3), préférentiellement du côté gauche par rapport à la direction d'avance (A). Ce côté est celui par lequel l'opérateur monte et descend de la cabine du véhicule tracteur (position ergonomique, aisément accessible). La transformation du mouvement de rotation de la barre (15) en mouvement de translation des verrous (12,12') peut par exemple être obtenue, pour chaque verrou, par le biais d'une liaison glissière d'un doigt (14') d'une biellette (14) dans un trou oblong (12") d'un verrou (12, 12'). La barre (15), avantageusement montée avec guidage en rotation autour de son axe longitudinal, forme avec les biellettes (14) une tringlerie de synchronisation des mouvements des deux verrous (12, 12'). L'organe de commande (13) est éventuellement solidaire de l'une des biellettes, et préférentiellement monté à gauche. Toutefois, un agencement de l'organe de commande (13) à droite selon la direction d'avance (A) est envisageable. Grâce à la tringlerie de déplacement (barre de manœuvre commune (15)), le dispositif de verrouillage (11) permet une synchronisation du mouvement des deux verrous (12, 12'). D'une manière avantageuse, le déplacement des deux verrous (12, 12') est simultané. Il s'agit d'une commande centralisée des deux verrous (12, 12') commandée par l'unique organe de commande (13). De cette manière, l'utilisateur par une seule action sur l'organe de commande (13) va déplacer les deux verrous (12, 12') et par conséquent bloquer ou libérer la rotation et la translation de la traverse d'attelage (4) par rapport à la pièce (6) d'assemblage. L'organe de commande (13) est une poignée destinée à être actionnée manuellement par l'utilisateur. Les deux verrous (12, 12') sont reliés ensemble par une liaison mécanique, par exemple via la barre (15) de manœuvre.

Bien que seule une poignée de manœuvre soit représentée sur les dessins annexées, l'organe de commande (13) peut aussi consister en un actionneur par exemple hydraulique ou électrique (vérin) permettant de réaliser une commande à distance.

Avantageusement, la tête d'attelage (3) comprend deux butées arrière (10) dans le sens de la direction d'avance (A) et les verrous (12, 12') sont agencés de telle manière que le blocage en position de la traverse d'attelage (4) par rapport à la pièce d'assemblage articulé (6) est réalisé en coopération avec ces butées arrière (10). Les butées arrière (10) sont espacées l'une de l'autre, elles s'étendent de part et d'autre de la glissière (8). Elles sont disposées à une extrémité latérale de la pièce d'assemblage (6) articulé. Les deux butées arrière (10) sont alignées et disposées perpendiculairement par rapport à l'orientation de la glissière (8). On aboutit ainsi à un blocage sûr en rotation et en translation par verrouillage en position de la traverse (4) entre deux paires de butées coopérantes. La butée avant (9) limite la rotation de la traverse (4) lors des manœuvres du véhicule tracteur, en virages à droite ou à gauche. La butée avant (9) est disposée dans le plan vertical médian de la tête d'attelage (3). Sa disposition dans ce plan et sur l'axe de symétrie de la tête d'attelage permet un débattement angulaire de la traverse (4) identique pour une manœuvre à droite et une manœuvre à gauche. La butée avant (9) est avantageusement disposée devant la glissière (8) compte tenu de la direction d'avance (A). La glissière (8) est disposée dans le triangle formé par les trois butées (9, 10). Selon une alternative non représentée, la butée avant (9) peut être positionnée dans la glissière (8).

Pour positionner correctement la traverse d'attelage (4) en vue de son blocage en position, l'opérateur actionne le relevage du véhicule tracteur et alors, sous l'effet du mouvement du bâti (2) par rapport à la tête d'attelage (3), la traverse recule jusqu'à venir en contact contre les butées arrière (10) et dégager l'espace plan pour permettre le passage des verrous (12, 12') vers leur position engagée (sans nécessiter une quelconque opération de centrage).

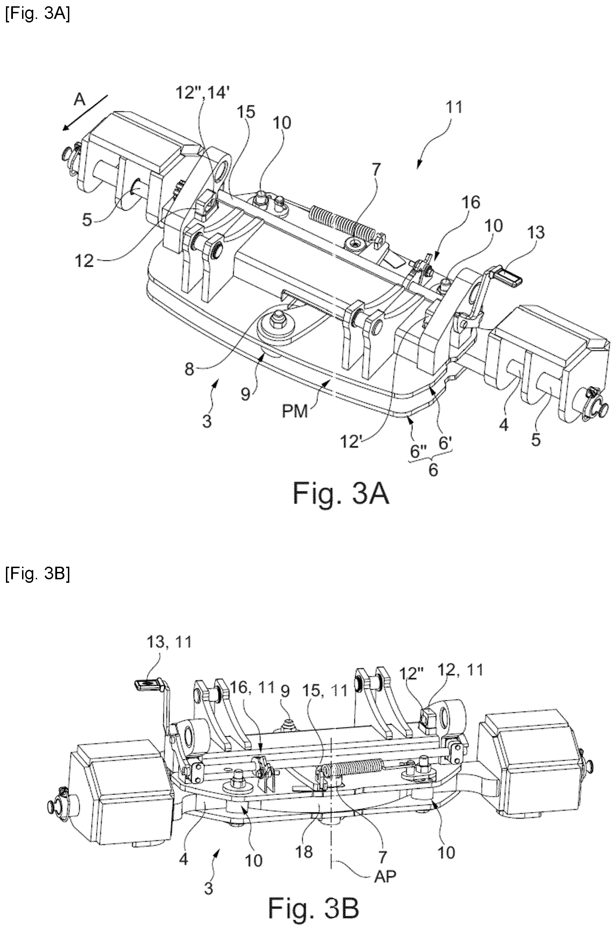

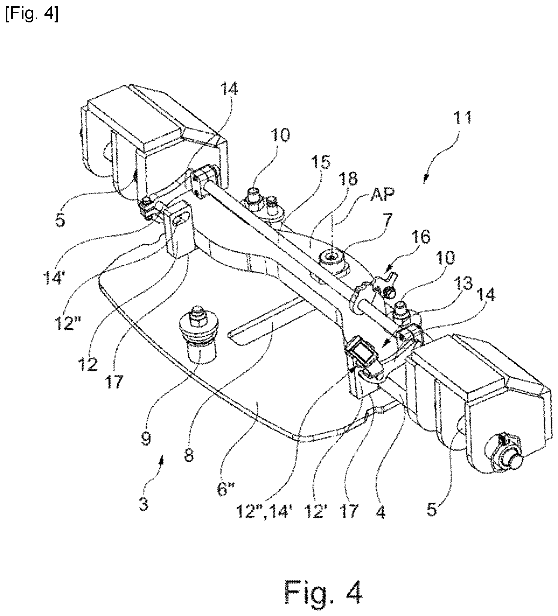

Comme le montrent les figures 3A et 4, le dispositif de verrouillage (11) peut comprendre un moyen (16) de blocage amovible des verrous (12, 12') en positions de verrouillage et de déverrouillage. Le moyen (16) bloque d'une part la rotation de la barre (15) de manœuvre et donc de l'organe de commande (13) et d'autre part la position des verrous (12, 12') dans la pièce (6) d'assemblage. Le verrouillage effectif des verrous (12 et 12') est assuré grâce au moyen (16) de blocage en configuration de transport et de travail de la charrue. La figure 4 représente la tête d'attelage (3) dans la configuration de travail (les verrous (12, 12') sont verrouillés et l'organe de commande (13) s'étend en avant et vers le bas). Le moyen (16) de blocage est par exemple un bouton poussoir. Le dispositif de verrouillage (11) peut comprendre un moyen (16) de blocage amovible sous contrainte élastique. Par exemple un moyen de blocage bistable, sous la forme d'un cliquet (16') interagissant avec une came (16") solidaire cinématiquement de la commande unique, peut être prévu. La came (16"), le cas échéant en forme de plaque ou de secteur angulaire, peut par exemple comprendre deux sites décalés angulairement autour de l'axe longitudinal et de rotation de l'organe de commande (13), et correspondant respectivement aux positions engagée et dégagée des verrous (12, 12'), le cliquet (16') étant sollicité élastiquement vers la came, et donc en engagement dans ces sites (ressort spirale sur l'axe de pivotement du cliquet, ou ressort de compression). Selon des alternatives non représentés, le moyen de blocage (16) amovible peut être réalisé par coincement/maintien de l'organe de commande (13) dans chacune des positions. Le maintien de l'organe de commande (13) se fait alors par exemple par un obstacle ou une lame ressort. Il est encore possible de prévoir un blocage amovible au moyen de pions à insérer. Chacune des positions de verrouillage et de déverrouillage du dispositif de verrouillage (11) devrait être sécurisée. Le dispositif de verrouillage (11) et le moyen de blocage (16) permettent une utilisation de la charrue (1) en configuration de travail et en configuration de transport en toute sécurité.

En accord avec une construction préférée de la tête d'attelage (3), illustrée sur les figures 2B, 3 et 4, la pièce (6) d'assemblage articulé comprend deux plaques (6', 6") mutuellement parallèles et espacées, définissant entre elles l'espace plan de montage (PM), les butées (9, 10) étant avantageusement formées par des entretoises d'assemblage de ces deux plaques (6', 6") et comprenant préférentiellement une butée avant (9) et deux butées arrière (10).

Avantageusement, le dispositif de verrouillage (11) est arrangé sur la plaque supérieure (6') de la pièce (6) d'assemblage articulé. En outre, les verrous (12, 12') sont préférentiellement agencés pour venir, en position de verrouillage, en engagement par translation dans des découpes (17) de formes adaptées et coïncidentes, ménagées dans les deux plaques (6' et 6") de cette pièce (6). Ainsi, à l'état engagé, les deux verrous (12, 12') traversent l'espace plan (PM) et bloque le déplacement de la traverse (4) dans ce dernier, avec les butées arrière (10). Les verrous (12, 12') ou les découpes (17) sont avantageusement disposés, selon la direction d'avance (A), entre la butée avant (9) et les deux butées arrière (10). Les deux verrous (12, 12') ou découpes (17) sont avantageusement plus espacés l'un de l'autre que les butées arrière (10) pour permettre un verrouillage et un bon maintien en rotation de la traverse (4). Pour le verrouillage de la tête d'attelage (3), l'opérateur va actionner manuellement l'organe de commande (13), vers l'avant, ce qui va, grâce à la tringlerie de déplacement, provoquer un déplacement vertical des deux verrous (12, 12') vers le bas. Les verrous vont alors être engagés dans les découpes (17) de la plaque inférieure (6"). Dans la position verrouillée ou engagée des verrous (12 et 12'), les verrous (12 et 12') traversent les découpes (17) de la plaque supérieure (6') et de la plaque inférieure (6"). Une telle position engagée des verrous (12 et 12') permet de bloquer la traverse d'attelage (4) en rotation et en translation. Dans la position dégagée de la traverse d'attelage (4), ou position déverrouillée des verrous (12 et 12'), chaque verrou (12, 12') libère l'espace plan de montage (PM) pour autoriser la mobilité de la traverse d'attelage (4) en translation et en rotation. D'une manière préférentielle, les verrous (12, 12') restent, partiellement ou totalement, engagés dans les découpes (17) ménagées dans la plaque supérieure (6') de la pièce (6) d'assemblage articulé. Il est tout à fait possible de prévoir que les verrous soient totalement dégagés de la plaque supérieure (6'). Selon un autre exemple alternatif de réalisation non représenté, le dispositif de verrouillage (11) est arrangé sur la plaque inférieure (6") de la pièce (6) d'assemblage articulé.

Selon d'autres aspects constructifs possibles de la tête d'attelage (3), le pivot (7) est solidaire de la traverse d'attelage (4) et la glissière (8) est ménagée dans les plaques supérieure et inférieure (6' et 6") de la pièce (6) d'assemblage articulé.

La traverse (4) peut présenter simplement une structure rectiligne. En variante, la traverse (4) peut comporter préférentiellement une partie centrale (18) de forme arquée, portant le pivot (7) et présentant une incurvation convexe à l'opposé de la direction d'avance (A), par rapport aux attaches (5).

Possiblement, la glissière (8), la traverse d'attelage (4) et les butées arrière (10) sont configurées et agencées de telle manière que la venue en butée de la traverse (4) sur les butées arrière (10) est concomitante avec la venue en butée du pivot (7) dans l'extrémité arrière de la glissière (8).

Bien que d'autres formes de réalisation puisent être envisagées, les verrous (12, 12') présentent avantageusement une section rectangulaire ou carrée et comportent avantageusement à leur extrémité libre un biseau favorisant leur engagement.

La tête d'attelage (3), et notamment la pièce (6), peut aussi comprendre, comme cela ressort partiellement des figures 2 et 3, un moyen d'accrochage du pivot (7), préférentiellement du type escamotable par pivotement, bloquant sa translation dans la glissière (8) en direction de l'extrémité arrière lorsque cette pièce (6) est soumise à un déplacement relatif selon la direction d'avance (A) par rapport à la traverse d'attelage (4), et, d'autre part, un moyen de sollicitation élastique qui réalise un engagement automatique du moyen d'accrochage avec le pivot (7) lorsque ce dernier se retrouve positionné dans la glissière (8) au-delà d'une distance déterminée par rapport à l'extrémité arrière.

La tête d'attelage oscillante verrouillable (3) selon l'invention peut trouver application dans différents types de machines (1) de travail du sol, tels que des déchaumeurs ou analogues, ou des machines de fenaison tels que des faucheuses, andaineurs ou faneurs. Toutefois, on aboutit à une mise en œuvre particulièrement favorable et bénéfique de l'invention lorsque la machine (1) consiste en une charrue, avantageusement munie d'au moins une roue support destinée à s'appuyer sur le sol au moins dans la configuration de transport. La charrue comprend préférentiellement également une roue pour le contrôle de profondeur de travail. En variante, une unique roue dite combinée peut remplir les deux fonctions précitées. Même si les figures 1 montrent une charrue réversible, l'invention s'applique aussi à une charrue simple qui n'aura qu'un seul groupe de corps de labour.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, pour autant qu'elles soient couvertes par la portée de l'invention telle qu'elle est définie par les revendications annexées.

## Revendications

1. Machine agricole (1), en particulier charrue, comprenant un bâti (2) portant au moins un outil (2') et une tête d'attelage (3) pour sa liaison avec un dispositif d'attelage trois points d'un véhicule tracteur, la tête d'attelage (3) comprenant, d'une part, une traverse d'attelage (4) comportant à ses deux extrémités opposées des attaches (5) destinées à venir en engagement avec les deux points d'attelage inférieurs du dispositif d'attelage trois points, et, d'autre part, une pièce (6) d'assemblage articulé pour la traverse (4), qui est solidaire du bâti (2) et reçoit cette traverse (4) dans un espace plan de montage (PM) dans lequel elle est mobile avec guidage en translation et en rotation par l'intermédiaire d'une liaison pivot (7) / glissière (8), l'axe (AP) du pivot (7) étant perpendiculaire au plan de l'espace de montage (PM), la glissière (8) étant parallèle au plan et les mouvements de rotation relatifs entre la traverse (4) et la pièce d'assemblage articulé (6) étant limités par des butées, respectivement avant (9) et arrière (10) par rapport à la glissière (8) et la direction d'avance (A) de la machine (1) en configuration de travail et en configuration de transport, machine (1) **caractérisée en ce que** la tête d'attelage (3) comprend un dispositif de verrouillage (11) à au moins deux verrous (12, 12') et à commande unique, configurés pour bloquer en position, en translation et en rotation, la traverse d'attelage (4) par rapport à la pièce (6) d'assemblage articulé, ce en coopération avec au moins l'une des butées (9, 10) et que le dispositif de verrouillage (11) comprend une tringlerie de déplacement simultané et synchronisé des deux verrous (12, 12') entrainée par un unique organe de commande (13).

2. Machine selon la revendication 1, **caractérisée en ce que** les deux verrous (12 et 12') étant avantageusement agencés pour un mouvement en translation perpendiculaire au plan de l'espace de montage (PM), dans leur déplacement alternatif entre une position engagée de verrouillage avec blocage de la traverse d'attelage (4) et une position dégagée de déverrouillage avec libération de cette traverse (4).

3. Machine selon la revendication 2, **caractérisée en ce que** la tringlerie du dispositif de verrouillage (11) comprend, pour chaque verrou (12, 12'), une biellette d'actionnement (14) reliée à une barre (15) de manœuvre commune, pouvant être entrainée en rotation autour de son axe par l'organe de commande (13), avantageusement un levier arrangé latéralement par rapport à la tête d'attelage (3), préférentiellement du côté gauche par rapport à la direction d'avance (A).

4. Machine selon l'une quelconque des revendications 1 à 3, **caractérisée en ce qu'**elle comprend deux butées arrière (10) dans le sens de la direction d'avance (A) et **en ce que** les verrous (12, 12') sont agencés de telle manière que le blocage en position de la traverse d'attelage (4) par rapport à la pièce d'assemblage articulé (6) est réalisé en coopération avec ces butées arrière (10).

5. Machine selon l'une quelconque des revendications 1 à 4, **caractérisée en ce que** le dispositif de verrouillage (11) comprend un moyen (16) de blocage amovible des verrous (12, 12') en positions de verrouillage et de déverrouillage.

6. Machine selon l'une quelconque des revendications 1 à 5, **caractérisée en ce que** la pièce (6) d'assemblage articulé comprend deux plaques (6', 6") mutuellement parallèles et espacées, définissant entre elles l'espace plan de montage (PM), les butées (9, 10) étant avantageusement formées par des entretoises d'assemblage de ces deux plaques (6', 6") et comprenant préférentiellement une butée avant (9) et deux butées arrière (10).

7. Machine selon la revendication 6, **caractérisée en ce que** le dispositif de verrouillage (11) est arrangé sur la plaque supérieure (6') de la pièce (6) d'assemblage articulé et **en ce que** les verrous (12, 12') sont agencés pour venir, en position de verrouillage, en engagement par translation dans des découpes (17) de formes adaptées et coïncidentes, ménagées dans les deux plaques (6' et 6") de cette pièce (6).

8. Machine selon l'une des revendications 6 et 7, **caractérisée en ce que** le pivot (7) est solidaire de la traverse d'attelage (4) et **en ce que** la glissière (8) est ménagée dans les plaques supérieure et inférieure (6' et 6") de la pièce (6) d'assemblage articulé, la traverse (4) comportant préférentiellement une partie centrale (18) de forme arquée, portant le pivot (7) et présentant une incurvation convexe à l'opposé de la direction d'avance (A), par rapport aux attaches (5).

9. Machine selon l'une quelconque des revendications 1 à 8, **caractérisée en ce que** les verrous (12, 12') présentent une section rectangulaire ou carrée et comportent avantageusement à leur extrémité libre un biseau favorisant leur engagement.

10. Machine selon l'une quelconque des revendications 1 à 9, **caractérisée en ce que** le dispositif de verrouillage (11) est intégré constructivement et en totalité à la tête d'attelage (3).

11. Machine selon l'une quelconque des revendications 1 à 10, **caractérisée en ce qu'**elle consiste en une charrue réversible, avantageusement munie d'au moins une roue destinée à s'appuyer sur le sol dans la configuration transport.

## Patentansprüche

1. Landwirtschaftliche Maschine (1), insbesondere ein Pflug, mit einem Gestell (2), das mindestens ein Werkzeug (2') und einen Kupplungskopf (3) für seine Verbindung mit einer Dreipunktkupplungsvorrichtung eines Zugfahrzeugs trägt, wobei der Kupplungskopf (3) einerseits einen Kupplungsquerträger (4) umfasst, der an seinen beiden gegenüberliegenden Enden Befestigungen (5) aufweist, die dazu bestimmt sind, mit den beiden unteren Kupplungspunkten der Dreipunktkupplungsvorrichtung in Eingriff zu kommen, und andererseits ein gelenkiges Verbindungsteil (6) für den Querträger (4), das fest mit dem Gestell (2) verbunden ist und diesen Querträger (4) in einem ebenen Montageraum (PM) aufnimmt, in dem er mit Translations- und Drehführung über eine Drehzapfen- (7) / Gleitschienen- (8) Verbindung beweglich ist, wobei die Achse (AP) des Drehzapfens (7) senkrecht zur Ebene des Montageraums (PM) steht, die Gleitschiene (8) parallel zur Ebene verläuft und die relativen Drehbewegungen zwischen dem Querträger (4) und dem gelenkigen Verbindungsteil (6) durch Anschläge begrenzt sind, die jeweils vorne (9) und hinten (10) in Bezug auf die Gleitschiene (8) und die Vorschubrichtung (A) der Maschine (1) in der Arbeits- und in der Transportkonfiguration angeordnet sind,
Maschine (1), **dadurch gekennzeichnet, dass** der Kupplungskopf (3) eine Verriegelungsvorrichtung (11) mit mindestens zwei Riegeln (12, 12') und einer einzigen Steuerung umfasst, die so konfiguriert sind, dass sie den Kupplungsquerträger (4) in Bezug auf das gelenkige Verbindungsteil (6) in Translations- und Drehposition blockieren, und zwar in Zusammenwirkung mit mindestens einem der Anschläge (9, 10), und dass die Verriegelungsvorrichtung (11) ein Gestänge für die gleichzeitige und synchronisierte Bewegung der beiden Riegel (12, 12') umfasst, das von einem einzigen Steuerelement (13) angetrieben wird.

2. Maschine nach Anspruch 1, **dadurch gekennzeichnet, dass** die beiden Riegel (12 und 12') vorteilhafterweise für eine translatorische Bewegung senkrecht zur Ebene des Montageraums (PM) angeordnet sind, in ihrer alternativen Bewegung zwischen einer Eingriffsposition zum Verriegeln mit Blockierung des Kupplungsquerträgers (4) und einer freigegebenen Position zum Entriegeln mit Freigabe dieses Querträgers (4).

3. Maschine nach Anspruch 2, **dadurch gekennzeichnet, dass** das Gestänge der Verriegelungsvorrichtung (11) für jeden Riegel (12, 12') eine Betätigungslenkstange (14) umfasst, die mit einer gemeinsamen Manövrierstange (15) verbunden ist, die durch das Steuerelement (13) um ihre Achse in Drehung versetzt werden kann, vorteilhafterweise ein Hebel, der seitlich in Bezug auf den Kupplungskopf (3), vorzugsweise auf der linken Seite in Bezug auf die Vorschubrichtung (A), angeordnet ist.

4. Maschine nach einem der Ansprüche 1 bis 3, **dadurch gekennzeichnet, dass** sie zwei hintere Anschläge (10) in Richtung der Vorschubrichtung (A) umfasst und dass die Riegel (12, 12') so angeordnet sind, dass die Positionsblockierung des Kupplungsquerträgers (4) in Bezug auf das gelenkige Verbindungsteil (6) im Zusammenwirken mit diesen hinteren Anschlägen (10) erreicht wird.

5. Maschine nach einem der Ansprüche 1 bis 4, **dadurch gekennzeichnet, dass** die Verriegelungsvorrichtung (11) ein Mittel (16) zum abnehmbaren Blockieren der Riegel (12, 12') in der Verriegelungs- und Entriegelungsposition umfasst.

6. Maschine nach einem der Ansprüche 1 bis 5, **dadurch gekennzeichnet, dass** das gelenkige Verbindungsteil (6) zwei zueinander parallele und voneinander beabstandete Platten (6', 6") umfasst, die zwischen sich den ebenen Montageraum (PM) definieren, wobei die Anschläge (9, 10) vorteilhafterweise durch Verbindungsstreben dieser beiden Platten (6', 6") gebildet werden und vorzugsweise einen vorderen Anschlag (9) und zwei hintere Anschläge (10) umfassen.

7. Maschine nach Anspruch 6, **dadurch gekennzeichnet, dass** die Verriegelungsvorrichtung (11) auf der oberen Platte (6') des gelenkigen Verbindungsteils (6) angeordnet ist und dass die Riegel (12, 12') so angeordnet sind, dass sie in der Verriegelungsposition durch Translation in Eingriff mit formangepassten und übereinstimmenden Ausschnitten (17) kommen, die in den beiden Platten (6' und 6") dieses Teils (6) vorgesehen sind.

8. Maschine nach einem der Ansprüche 6 und 7, **dadurch gekennzeichnet, dass** der Drehzapfen (7) fest mit dem Kupplungsquerträger (4) verbunden ist und dass die Gleitschiene (8) in der oberen und unteren Platte (6' und 6") des gelenkigen Verbindungsteils (6) angeordnet ist, wobei der Querträger (4) vorzugsweise einen bogenförmigen Mittelteil (18) aufweist, der den Drehzapfen (7) trägt und eine konvexe Krümmung entgegen der Vorschubrichtung (A) in Bezug auf die Befestigungen (5) aufweist.

9. Maschine nach einem der Ansprüche 1 bis 8, **dadurch gekennzeichnet, dass** die Riegel (12, 12') einen rechteckigen oder quadratischen Querschnitt aufweisen und vorteilhafterweise an ihrem freien Ende eine Abschrägung aufweisen, die ihr Eingreifen begünstigt.

10. Maschine nach einem der Ansprüche 1 bis 9, **dadurch gekennzeichnet, dass** die Verriegelungsvorrichtung (11) konstruktiv und vollständig in den Kupplungskopf (3) integriert ist.

11. Maschine nach einem der Ansprüche 1 bis 10, **dadurch gekennzeichnet, dass** sie aus einem Wendepflug besteht, der vorteilhafterweise mit mindestens einem Rad versehen ist, das dazu bestimmt ist, sich in der Transportkonfiguration auf dem Boden abzustützen.

## Claims

1. Agricultural machine (1), in particular a plough, comprising a frame (2) carrying at least one tool (2') and a hitching head (3) for connection to a three-point hitching mechanism of a tractor vehicle, wherein the hitching head (3) comprises, on the one hand, a crossbar (4) comprising at its two opposite ends fastening elements (5) intended to engage with the two lower hitching points of the three-point hitching mechanism, and, on the other hand, an articulated assembly part (6) for the crossbar (4), which is integral with the frame (2) and receives this crossbar (4) in an assembly space (PM) in which it is movable with translational and rotational guidance by means of a pivot pin (7)/slide (8) connection, wherein the axis (AP) of the pivot pin (7) is perpendicular to the plane of the assembly space (PM), the slide (8) is parallel to the plane and the relative rotational movements between the crossbar (4) and the articulated assembly part (6) are limited by stops, respectively front (9) and rear (10) with respect to the slide (8) and the direction of advance (A) of the machine (1) in the working configuration and in the transport configuration,
machine (1) **characterised in that** the hitching head (3) comprises a locking device (11) with at least two locks (12, 12') and a single control, configured to lock the crossbar (4) in position, in translation and in rotation, with respect to the articulated assembly part (6), in cooperation with at least one of the stops (9, 10) and **in that** the locking device (11) comprises a linkage for simultaneous and synchronised movement of the two locks (12, 12') driven by a single control element (13).

2. Machine according to Claim 1, **characterised in that** the two locks (12 and 12') are advantageously arranged for translational movement perpendicular to the plane of the assembly space (PM), in their alternative displacement between an engaged locking position with blocking of the crossbar (4) and a disengaged unlocking position with release of this crossbar (4).

3. Machine according to claim 2, **characterised in that** the linkage of the locking device (11) comprises, for each lock (12, 12'), an actuating tie rod (14) connected to a common operating bar (15), which can be driven in rotation around its axis by the control element (13), advantageously a lever arranged laterally with respect to the hitching head (3), preferably on the left-hand side with respect to the direction of advance (A).

4. Machine according to any one of claims 1 to 3, **characterised in that** it comprises two rear stops (10) in the direction of advance (A) and **in that** the locks (12, 12') are arranged in such a way that the blocking in position of the crossbar (4) with respect to the articulated assembly part (6) is achieved in cooperation with these rear stops (10).

5. Machine according to any one of claims 1 to 4, **characterised in that** the locking device (11) comprises a removable means (16) for blocking the locks (12, 12') in locking and unlocking positions.

6. Machine according to any one of claims 1 to 5, **characterised in that** the articulated assembly part (6) comprises two mutually parallel and spaced-apart plates (6', 6") defining between them the assembly space (PM), the stops (9, 10) advantageously being formed by spacers for assembling these two plates (6', 6") and preferably comprising a front stop (9) and two rear stops (10).

7. Machine according to claim 6, **characterised in that** the locking device (11) is arranged on the upper plate (6') of the articulated assembly part (6) and **in that** the locks (12, 12') are arranged so as to engage, in the locking position, by translation in cut-outs (17) of suitable and coincident shapes, formed in the two plates (6' and 6") of this part (6).

8. Machine according to one of claims 6 and 7, **characterised in that** the pivot pin (7) is integral with the crossbar (4) and **in that** the slide (8) is arranged in the upper and lower plates (6' and 6") of the articulated assembly part (6), the crossbar (4) preferably comprising a central part (18) of arched shape, carrying the pivot pin (7) and having a convex curvature opposite the direction of advance (A), with respect to the fastening elements (5).

9. Machine according to any one of claims 1 to 8, **characterised in that** the locks (12, 12') have a rectangular or square section and advantageously have a bevel at their free end to facilitate their engagement.

10. Machine according to any one of claims 1 to 9, **characterised in that** the locking device (11) is integrated constructively and completely into the hitching head (3).

11. Machine according to any one of claims 1 to 10, **characterised in that** it consists of a reversible plough, advantageously fitted with at least one wheel intended to rest on the ground in the transport configuration.
